# EUROPÄISCHE PATENTSCHRIFT

(11) **EP 3 090 890 B1**
(45) Veröffentlichungstag und Bekanntmachung des Hinweises auf die Patenterteilung: **22.08.2018**
(21) Anmeldenummer: 16000860.3
(22) Anmeldetag: 15.04.2016
(51) Int. Cl.: B60G 17/0165, B60G 17/08, B60G 17/0195, B60W 10/22, B60W 30/02, B60W 40/02, B60W 50/00, G08G 1/16

(54) **VERFAHREN ZUR REGELUNG ODER STEUERUNG DER DÄMPFERKRAFT VERSTELLBARER DÄMPFER IN KRAFTFAHRZEUGEN, INSBESONDERE IN NUTZFAHRZEUGEN**
METHOD FOR THE REGULATION OR CONTROL OF THE DAMPING FORCE OF AN ADJUSTABLE AUTOMOTIVE DAMPER, IN PARTICULAR IN COMMERCIAL VEHICLES
PROCEDE DE REGLAGE OU DE COMMANDE DE LA FORCE D'AMORTISSEMENT D'AMORTISSEURS REGLABLES DANS DES VEHICULES AUTOMOBILES, EN PARTICULIER DES VEHICULES UTILITAIRES

(30) Priorität: 08.05.2015 DE 102015005964
(43) Veröffentlichungstag der Anmeldung: 09.11.2016
(73) Patentinhaber: MAN Truck & Bus AG, 80995 München (DE)
(72) Erfinder: Wagner, Philipp, 86316 Friedberg (DE); Fleischhacker, Jan, 82140 Olching (DE); Ille, Thomas, 82223 Eichenau (DE)
(74) Vertreter: v. Bezold & Partner Patentanwälte - PartG mbB

(56) Entgegenhaltungen:
- EP-A2- 1 449 688
- DE-A1- 10 344 053
- DE-A1- 19 600 734
- DE-A1-102005 051 141
- JP-A- H0 911 723
- JP-A- H0 962 980
- JP-A- H1 125 389
- JP-A- 2000 314 337
- US-A1- 2003 125 845
- US-A1- 2005 090 956
- US-A1- 2012 203 428
- US-B1- 6 763 292

## Beschreibung

Die Erfindung betrifft ein Verfahren zur Regelung oder Steuerung der Dämpferkraft verstellbarer Dämpfer in Kraftfahrzeugen, insbesondere in Nutzfahrzeugen, gemäß dem Oberbegriff des Anspruchs 1 und eine Vorrichtung mit den Merkmalen des Oberbegriffes des Anspruchs 13.

Bei der Auslegung von Fahrwerkregelsystemen ist stets ein Kompromiss notwendig zwischen Komfort und Fahrsicherheit. Ein ideales Fahrwerk soll die durch Fahrbahnunebenheiten angeregten Schwingungen möglichst gut dämpfen und gleichzeitig die Radaufstandskräfte möglichst konstant auf einem vorgegebenem Wert halten, weil hierdurch die Räder das höchste Längs- und Seitenführungspotential haben und das Fahrzeug mit optimaler Sicherheit führen.

Die gegenwärtig vorhandenen Dämpfersysteme in Fahrzeugen sind in drei Gruppen einteilbar: passive, semiaktive und aktive Dämpfersysteme. Bei passiven Dämpfersystemen sind die Größe und die Richtung der von dem Dämpfer ausgeübten Kraft nur abhängig von der relativen Geschwindigkeit des Dämpfers. In passiven Dämpfersystemen ist eine Veränderung der Dämpferkraft während des Fahrbetriebes nicht vorgesehen. Die Abstimmung eines Fahrzeugs mit passiven Stoßdämpfern stellt immer nur einen Kompromiss dar, da unterschiedliche Fahrzustände mit derselben Fahrwerkseinstellung abgedeckt werden müssen.

Eine Lösung für diesen Zielkonflikt besteht im Einsatz semiaktiver Stoßdämpfer, die es ermöglichen, die Dämpferkennlinien über einen weiten Bereich per elektronischer Ansteuerung zu verändern und damit für unterschiedliche Fahrsituationen innerhalb weniger Millisekunden eine optimale Dämpfereinstellung bereitzustellen. Aber auch für unterschiedliche Beladungszustände, die insbesondere im Nutzfahrzeug große Unterschiede bzgl. Gesamtmasse und Schwerpunktslage bewirken können, können geeignete Dämpfervoreinstellungen gewählt werden, die einer einzigen Abstimmung passiver Dämpfer überlegen sind.

Bei semiaktiven Dämpfersystemen kann deren Kennlinie während der Fahrt schnell und über einen weiten Bereich verändert werden. Insbesondere können solche Stoßdämpfer auf (proportionalen) Verstellventilen beruhen, die den Ölfluss verändern (engl. *Continuous Damping Control*)*,* oder auf magneto- oder elektrorheologischen Flüssigkeiten, wobei ein magnetisches oder elektrisches Feld die Viskosität der Flüssigkeit und damit die Dämpfkraft beeinflusst. Es sind auch Kombinationen der Technologien aus der Praxis bekannt. Auf diese Art und Weise können verschiedene Regelungsprogramme mittels eines Stellelementes in Abhängigkeit von der aktuellen Fahrsituation die optimale Dämpferkraft einstellen. Bei aktiven Dämpfersystemen wird über einen Aktuator die gewünschte Kraft in jeglicher Richtung bereitgestellt, unabhängig von der relativen Geschwindigkeit des Dämpfers.

Im Stand der Technik wurden bereits zahlreiche Verfahren zur Regelung oder Steuerung der Dämpferkraft verstellbarer Dämpfer vorgeschlagen.

So ist in der DE 101 26 933 A1 ein gattungsgemäßes Verfahren offenbart, bei dem die Regelung oder Steuerung in Abhängigkeit von der Dämpfergeschwindigkeit erfolgt und die Dämpfergeschwindigkeitssignale mittels Abstandssensoren und Differenzbildung der Abstandssensorensignale über eine festgelegte Zeitdifferenz ermittelt werden.

DE 100 35 150 A1 offenbart ein Fahrzeug mit steuerbaren Schwingungsdämpfern, deren Dämpfungseigenschaften abhängig von der Höhe des Bremsdruckes eingestellt werden, wobei ggf. zusätzlich auch noch eine von der Fahrzeuggeschwindigkeit abhängige Regelung möglich ist. Die Dämpfungseigenschaften sind dabei durch Kennlinien darstellbar, die entweder eine "harte" Einstellung, also eine große Dämpfung, oder eine "weiche" Einstellung, also eine geringe Dämpfung, erlauben. Abhängig vom Bremsdruck wird hier eine mindestens kurzzeitige Einstellung auf eine "harte" Kennlinie durchgeführt.

DE 10 2004 053 695 A1 offenbart ein Verfahren zur Dämpfung von Karosserie-, Fahrwerks-, oder Radschwingungen eines Kraftfahrzeugs, bei dem über Sensoren ein Bremszustand des Kraftfahrzeugs detektiert wird und bei dem jeweils die Aufbaubeschleunigungen und die Fahrwerks- oder Radbeschleunigungen separat über Sensoren ermittelt werden. Gemäß diesem Verfahren wird nach Erkennen eines Bremszustandes und nach Überschreiten eines Grenzwertes der über Sensoren ermittelten Aufbaubeschleunigung und/oder Radbeschleunigung während einer ersten Schwingungsperiode der Karosserie solange eine harte Dämpfungscharakteristik für die betroffenen Räder oder Achsen eingestellt und beibehalten, bis durch die über Sensoren ermittelten Aufbaubeschleunigungen und/oder Radbeschleunigungen eine Umkehr der Radlast oder eine Verminderung der Radlast unter einen Mindestwert festgestellt wird. Erst danach werden die Dämpfer in der Zug- und Druckstufe innerhalb vorgegebener Dämpferkennlinien geregelt.

Die DE 198 03 370 A1 offenbart ein Verfahren zum Betrieb einer Federungs- und Dämpfungseinrichtung eines Kraftfahrzeugs, bei dem die Dämpfer einzelner Räder bei Vorliegen eines außerhalb der regulären Werte liegenden Beschleunigungssignals gesperrt oder verhärtet werden. Hierdurch soll ein Aufschaukeln der Karosserie verhindert werden.

Die US 4,741,554 zeigt ein Regelungssystem für Fahrwerke von Kraftfahrzeugen, mit dem ein zu starkes Nicken und Aufschaukeln des Fahrzeugs vermieden werden soll (anti-dive and anti-rebound system). Hierbei erfolgt bei einer Bremsung abhängig von einer über Sensoren ermittelten Höhenstellung der Karosserie eine Umschaltung der Dämpfung auf eine härtere Kennung. Diese härtere Kennung wird für einen bestimmten Zeitraum beibehalten. Im ungebremsten Zustand und oberhalb einer bestimmten Grenzhöhe der Karosserie wird die Dämpfung "weich" geschaltet.

Die EP 0 795 429 A2 offenbart ein Verfahren zur Steuerung eines Dämpfers, welches einen sogenannten "Skyhook"-Algorithmus bei normaler Fahrt bereitstellt und beim Bremsen Radlastschwankungen unterdrücken soll. Abhängig von der Schlupfermittlung über einen Vergleich der Raddrehzahlen mit der tatsächlichen Karosserie-Geschwindigkeit, abhängig vom Bremsdruck - als Startsignal - und abhängig von der Aufbaubeschleunigung erfolgt hier beim Bremsen eine variable Einstellung der Dämpfungscharakteristik einzelner Stoßdämpfer in der Zug- und in der Druckstufe im Wesentlichen so, dass jeweils nur eines der Charakteristika, also entweder die Zugstufe oder die Druckstufe, variabel geregelt wird, während das jeweils andere "weich" geschaltet ist.

Die vorgenannten Ansätze aus dem Stand der Technik haben gemeinsam, dass zur Regelung oder Steuerung der Dämpferkraft verstellbarer Dämpfer ein oder mehrere Parameter mittels einer fahrzeuginternen Sensorik bestimmt werden, aus dem oder denen eine Fahrwerksanforderung und/oder eine Fahrbahnbeschaffenheit ableitbar ist. Beispiele solcher Parameter sind, wie vorstehend erläutert, ein Bremszustand des Kraftfahrzeuges, die Aufbaubeschleunigung, d. h. die Vertikalbeschleunigung der Karosserie, die Fahrwerks- oder Radbeschleunigungen und/oder die Dämpfergeschwindigkeit. Zur Messung der Parameterwerte können beispielsweise Abstandssensoren verwendet werden, die die Entfernung zwischen einem Rad und einem Fahrzeugaufbau im Zeitverlauf messen.

Ein Nachteil der bekannten Ansätze ist, dass damit eine Anpassung der Dämpfereinstellung erst möglich ist, nachdem eine Verschlechterung oder Verbesserung der Fahrbahnbeschaffenheit bereits eingetreten ist, was aus Sicherheits-, Komfort- und Verschleißgesichtspunkten nachteilig ist.

Aus der DE 103 44 053 A1, der US 2012/0203428 A1, der US 6,763,292 B1 und der JP 2000 314337 A ist bekannt, zur Dämpfereinstellung ferner eine Größe zu verwenden, die von einer fahrzeugexternen Datenquelle bereitgestellt wurde. Aus der DE 10 2005 051 141 A1 ist ein Verfahren zur Regelung eines regelbaren Dämpfersystems bekannt, bei dem eine in vertikale Richtung gerichtete Bewegung eines vorausfahrenden Fahrzeugs erfasst und hierauf basierend ein Dämpfungsverhalten des Schwingungsdämpfers eingestellt wird. Die US 2003/0125845 A1 beschreibt ein Fahrzeugkommunikationssystem, über das ein Fahrzeug Informationen über vorausliegende Fahrbedingungen erhalten kann. Die JP H09 11723 A offenbart einen Ansatz zur Anpassung der Dämpferstärke unter Verwendung der aktuellen Position und Fahrtrichtung des Fahrzeugs und unter Verwendung von Informationen betreffend vorausliegenden Straßenbedingungen.

Es ist somit eine Aufgabe der Erfindung, ein verbessertes Verfahren zur Regelung oder Steuerung der Dämpferkraft verstellbarer Dämpfer in Kraftfahrzeugen, insbesondere in Nutzfahrzeugen, bereitzustellen, mit dem Nachteile herkömmlicher Techniken vermieden werden können. Die Aufgabe der Erfindung ist es insbesondere, ein Verfahren zur Regelung oder Steuerung der Dämpferkraft verstellbarer Dämpfer in Kraftfahrzeugen bereitzustellen, das die Fahrsicherheit und den Komfort für den Fahrer verbessert. Eine weitere Aufgabe ist es, eine Vorrichtung zur Regelung oder Steuerung der Dämpferkraft verstellbarer Dämpfer in Kraftfahrzeugen bereitzustellen, mit der Nachteile herkömmlicher Vorrichtungen vermieden werden können.

Diese Aufgaben werden durch ein Verfahren mit den Merkmalen des Anspruchs 1 und eine Vorrichtung mit den Merkmalen des Anspruchs 12 gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein Verfahren zur Regelung oder Steuerung der Dämpferkraft verstellbarer Dämpfer in Kraftfahrzeugen, insbesondere in Nutzfahrzeugen, mit aktiven und/oder semiaktiven Dämpfersystemen vorgeschlagen. Gemäß allgemeinen Gesichtspunkten der Erfindung erfolgt die Regelung oder Steuerung in Abhängigkeit von wenigstens einem Parameter, aus dem eine Fahrwerksanforderung und/oder eine Fahrbahnbeschaffenheit ableitbar ist, wobei ein Parameterwert des wenigstens einen Parameters von einer fahrzeugexternen Datenquelle bereitgestellt und vom Kraftfahrzeug im Fahrbetrieb empfangen wird.

Eine Besonderheit der Erfindung liegt somit darin, dass der oder die zur Regelung oder Steuerung der Dämpferkraft verwendete(n) Parameter nicht oder zumindest nicht ausschließlich mit einer fahrzeuginternen Sensorik gemessen werden, sondern von einer fahrzeugexternen Datenquelle bereitgestellt werden. Mittels derartiger extern bereitgestellter Daten kann eine größere Interpretationstiefe der aktuellen Fahrsituation und insbesondere auch der Fahrzeugumgebung realisiert werden, wodurch Anforderungen an die Dämpfer- bzw. Fahrwerkseinstellung frühzeitig bestimmt und prognostiziert werden können.

Beispielsweise kann die fahrzeugexterne Datenquelle wenigstens ein Fremdfahrzeug sein, vorzugsweise ein vorausfahrendes Fremdfahrzeug, wobei Parameterwerte des wenigstens einen Parameters von dem wenigstens einen Fremdfahrzeug drahtlos über eine Fahrzeug-zu-Fahrzeug-Kommunikation empfangen werden. Dies bietet den Vorteil, dass das Fahrzeug unmittelbar, vorzugsweise in Echtzeit, von vorausfahrenden Fremdfahrzeugen für die Dämpfereinstellung relevante Daten empfangen kann, um so kurzfristig über geänderte Anforderungen an die Dämpfereinstellung, z. B. eine vorausliegende Fahrbahnverschlechterung, informiert zu werden. Dadurch kann das Fahrzeug ggf. rechtzeitig seine Dämpfereinstellung anpassen.

Ferner besteht im Rahmen der Erfindung die Möglichkeit, dass die fahrzeugexterne Datenquelle eine Datenbank, vorzugsweise eine Internetdatenbank ist, in der Parameterwerte des wenigstens einen Parameters hinterlegt sind und per Drahtlosfernabfrage vom Kraftfahrzeug abrufbar sind. Dies bietet den Vorteil, dass sich das Fahrzeug unabhängig von der Verfügbarkeit des wenigstens einen Parameters über eine Fahrzeug-zu-Fahrzeug-Kommunikation fahrzeugextern erzeugte Informationen zur Fahrwerkseinstellung beschaffen kann. Ferner kann gemäß dieser Variante auf unterschiedlichste Datenbanken oder sog. BigData-Datenquellen zugegriffen werden, die für die Dämpfereinstellung relevante Daten enthalten und vom Fahrzeug ausgewertet werden können. Ferner können die vorstehend genannten Daten des Fremdfahrzeugs in einer Datenbank zwischengespeichert werden, z. B. um auch Zugriff darauf zu ermöglichen, wenn zwischen den Fahrzeugen keine Fahrzeug-zu-Fahrzeug-Kommunikation möglich ist.

Beispielsweise kann der wenigstens eine Parameter eine Wetterinformation, eine Verkehrsinformation, eine Fahrbahnbeschaffenheit und/oder eine Karteninformation betreffend die aktuelle Fahrposition und/oder Fahrtroute des Fahrzeugs enthalten. Eine Wetterinformation kann z. B. angeben, ob an der aktuellen Fahrposition und/oder wo auf der vorausliegenden Fahrtroute mit Niederschlag oder einer nassen Fahrbahn zu rechnen ist. An diesen Stellen kann die Steuerung oder Regelung eine sicherheitsorientierte Dämpfereinstellung einstellen. Eine Fahrbahnbeschaffenheit, z. B. "gut", "normal", "schlecht", kann in analoger Weise angeben, ob an der aktuellen Fahrposition und/oder wo auf der vorausliegenden Fahrtroute mit Fahrbahnunebenheiten, Schlaglöchern etc. zu rechnen ist. In diesem Sinne kann aus diesen Parametern eine Fahrwerksanforderung und/oder eine Fahrbahnbeschaffenheit abgeleitet und dann zur Einstellung der Dämpferkraft verwendet werden. Gemäß der vorgenannten Ausführungsvariante kann dann eine sicherheitsbasierte Dämpfereinstellung, die möglichst geringe Radlastschwankungen bewirkt, für die Dämpferkraft des verstellbaren Dämpfers eingestellt werden, wenn beispielsweise der wenigstens eine Parameter eine Wetterinformation angibt und diese eine hohe Wahrscheinlichkeit für Regen oder Schnee an der aktuellen Fahrposition des Kraftfahrzeugs angibt.

Eine weitere vorteilhafte Möglichkeit der erfindungsgemäßen Realisierung sieht vor, dass der wenigstens eine Parameter einen Betriebszustand und/oder ein Fahrverhalten mindestens eines Fremdfahrzeugs angibt, das aktuell auf der gleichen Straße oder zumindest in der Nähe von dem Kraftfahrzeug fährt oder gefahren ist. Im Falle des Empfangs des wenigstens einen Parameters über eine Fahrzeug-zu-Fahrzeug-Kommunikation ist das Fremdfahrzeug vorzugsweise ein in Bezug auf das Fahrzeug vorausfahrendes Fremdfahrzeug.

Eine Variante dieser Ausgestaltungsform sieht vor, dass der wenigstens eine Parameter einen aktuellen Geschwindigkeitsverlauf des Fremdfahrzeugs angibt oder ein aktueller Geschwindigkeitsverlauf daraus ableitbar ist. Beispielsweise kann aus einer plötzlichen Geschwindigkeitsverringerung des vorausfahrenden Fremdfahrzeugs oder aus einer erhöhten Bremsaktivität auf eine, insbesondere auch temporäre Verschlechterung, Verschmutzung des Fahrbahnzustandes oder das Vorhandensein von Fremdkörpern auf der Fahrbahn geschlossen werden, wenn aus weiteren, z. B. internetbasierten, Quellen zusätzlich ermittelt wurde, dass weder eine entsprechende Geschwindigkeitsbegrenzung noch ein Stau vorliegt. Wird auf diese Weise auf eine Verschlechterung des Fahrbahnzustandes geschlossen, kann wiederum eine sicherheitsorientierte Dämpfereinstellung gewählt werden.

Ferner ist es vorteilhaft, wenn der wenigstens eine Parameter eine Dämpfer- bzw. Fahrwerksaktivität, insbesondere eine Rad- und/oder Karosserieaufbaubewegung, des mindestens einen Fremdfahrzeugs angibt oder diese daraus ableitbar ist. Beispielsweise kann das Fremdfahrzeug die Messwerte seiner Fahrwerksensorik über eine Fahrzeug-zu-Fahrzeug-Kommunikation in vorgegebener genormter Form bereitstellen. Anhand dieser Daten des Fremdfahrzeugs kann eine vorausliegende veränderte Fahrbahnunebenheit unmittelbar erkannt werden, und zwar bevor das Fahrzeug diese betreffende Stelle erreicht.

Bei einer Variante der vorgenannten Ausführungsbeispiele werden die jeweiligen Parameterwerte zusammen mit einer Ortsinformation, z. B. in Form von GPS-Daten, bereitgestellt, die die geographische Stelle angibt, für die der jeweilige Parameterwert gültig ist. Dies ermöglicht eine genaue Vorhersage derjenigen Stelle, an der im Rahmen der Steuerung oder Regelung die Dämpferkraft angepasst werden soll.

Erfindungsgemäß erfolgt die Regelung oder Steuerung in Abhängigkeit von wenigstens einem fahrzeugintern ermittelten Parameter wenigstens eines Fahrerassistenzsystems, so dass fahrzeugextern ermittelte Daten mit fahrzeugintern ermittelten Daten kombiniert werden, um die Dämpferregelung- bzw. Steuerung zu verbessern. Der fahrzeugintern ermittelte Parameter kann ein fahrzeugintern ermittelter Parameter sein, wie vorstehend im Zusammenhang mit dem Stand der Technik beschrieben.

Besonders vorteilhaft ist jedoch, wenn der wenigstens eine fahrzeugintern ermittelte Parameter ein Parameter ist, aus dem eine Fahrwerksanforderung und/oder eine Fahrbahnbeschaffenheit ableitbar ist und der von wenigstens einem Fahrerassistenzsystem bereitgestellt wird.

Das wenigstens eine Fahrerassistenzsystem umfasst einen Abstandstempomat, und der fahrzeugintern ermittelte Parameter gibt eine Geschwindigkeit oder einen Geschwindigkeitsverlauf eines vorausfahrenden Fremdfahrzeugs an, die oder der mittels des Abstandstempomaten fortlaufend erfasst wird.

Eine weitere Möglichkeit im Rahmen der Erfindung ist, dass das wenigstens eine Fahrerassistenzsystem ein Kamerasystem, Lasersystem und/oder Radarsystem des Fahrzeugs umfasst und der fahrzeugintern ermittelte Parameter eine mit einem solchen System ermittelte aktuelle Wetterinformation und/oder Fahrbahninformation angibt, aus denen wiederum eine Fahrwerksanforderung und/oder eine Fahrbahnbeschaffenheit ableitbar ist.

Gemäß einer weiteren Ausführungsvariante werden die empfangenen Werte des wenigstens einen Parameters der fahrzeugexternen Datenquelle anhand der Werte des fahrzeugintern ermittelten Parameters plausibilisiert und/oder umgekehrt. Dies bedeutet, dass die verwendeten Parameter der fahrzeugexternen Datenquelle(n) und die fahrzeugintern ermittelten Parameter redundante und/oder komplementäre Informationen enthalten können, um die Genauigkeit und Zuverlässigkeit der Ableitung einer Fahrwerksanforderung und/oder eine Fahrbahnbeschaffenheit aus diesen Datenquellen zu verbessern. Beispielsweise kann aus einer plötzlichen Geschwindigkeitsverringerung eines vorausfahrenden Fremdfahrzeugs, die mittels des Abstandstempomaten erfasst wird, auf eine Gefahrenbremsung des vorausfahrenden Fremdfahrzeugs aufgrund einer Verschlechterung des Fahrbahnzustandes oder Fremdkörpern (z. B. Reifenteile etc.) geschlossen werden, wenn aus weiteren fahrzeugexternen, z. B. internetbasierten, Datenquellen anhand komplementärer Verkehrs- und Karteninformationen zusätzlich ermittelt wurde, dass weder eine entsprechende Geschwindigkeitsbegrenzung noch ein Stau vorliegt.

Gemäß einer bevorzugten Ausführungsform ist der verstellbare Dämpfer ein semiaktiver Stoßdämpfer eines Fahrwerks. Die Erfindung ist jedoch nicht nur zur Regelung oder Steuerung von semiaktiven Fahrwerken anwendbar. Das gesteuerte oder geregelte Dämpfungssystem kann ein Fahrerhausdämpfungssystem und/oder ein Ladungslagerungssystem eines Nutzfahrzeugs sein. Hier steht die sog. Skyhook-Regelung im Vordergrund, da eine Fahrerhauslagerung keinen direkten Einfluss auf die Radführung hat

Gemäß einem weiteren Aspekt der Erfindung kann das Fahrzeug eine einem Fahrbahnabschnitt zuordenbare zeitlich veränderliche Information, insbesondere eine Fahrbahnbeschaffenheit, eine Verkehrsinformation, eine Wetterinformation, z. B. das Vorhandensein von Schnee- und Eisglätte, mittels eines fahrzeuginternen Sensorsystems und/oder aus einer Verkehrszeichenerkennung eigener oder fremder Fahrzeuge ableiten. Gemäß diesem Aspekt erzeugt das Fahrzeug Kartendaten, auf denen Fahrbahnabschnitte gekennzeichnet sind, für die die zeitlich veränderliche Information ermittelt wurde, z. B. Fahrbahnabschnitte, die eine vorbestimmte, insbesondere schlechte Fahrbahnbeschaffenheit aufweisen, und wobei den gekennzeichneten Fahrbahnabschnitten die ermittelte Information zugeordnet ist. Gemäß diesem Aspekt übermittelt das Fahrzeug die erzeugten Kartendaten an ein Fremdfahrzeug über eine Fahrzeug-zu-Fahrzeug-Kommunikation und/oder an eine Datenbank, vorzugsweise eine Internetdatenbank. Gemäß dieser Variante können Kraftfahrzeuge gegenseitig Informationen, die zur Regelung oder Steuerung der Dämpfer nutzbar sind, zur Verfügung stellen.

Im Rahmen der Erfindung wird ferner eine Vorrichtung zur Regelung oder Steuerung der Dämpferkraft verstellbarer Dämpfer in Kraftfahrzeugen, insbesondere in Nutzfahrzeugen, mit aktiven und/oder semiaktiven Dämpfersystemen vorgeschlagen, wobei die Vorrichtung eingerichtet ist, die Regelung oder Steuerung in Abhängigkeit von wenigstens einem Parameter durchzuführen, aus dem eine Fahrwerksanforderung und/oder eine Fahrbahnbeschaffenheit ableitbar ist. Gemäß allgemeinen Gesichtspunkten der Erfindung ist die Vorrichtung eingerichtet, im Fahrbetrieb Parameterwerte des wenigstens einen Parameters von einer fahrzeugexternen Datenquelle zu empfangen. Die Vorrichtung ist insbesondere eingerichtet, das Verfahren, wie hierin offenbart, durchzuführen. Zur Vermeidung von Wiederholungen sollen rein verfahrensgemäß offenbarte Merkmale auch als vorrichtungsgemäß offenbart gelten und beanspruchbar sein.

Ferner betrifft die Erfindung ein Kraftfahrzeug, insbesondere Nutzfahrzeug, mit einer Vorrichtung wie hierin offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Illustration einer Fahrzeug-zu-Fahrzeug-Kommunikation und einer Fernabfrage einer Datenbank gemäß einer Ausführungsform der Erfindung;
- Figur 2: ein schematisches Blockschaltdiagramm eines Fahrzeugs mit einer Vorrichtung zur Regelung oder Steuerung der Dämpferkraft verstellbarer Dämpfer gemäß einer Ausführungsform der Erfindung; und
- Figur 3: ein Ablaufdiagramm zur Illustration eines Verfahrens zur Regelung oder Steuerung der Dämpferkraft verstellbarer Dämpfer gemäß einer Ausführungsform der Erfindung.

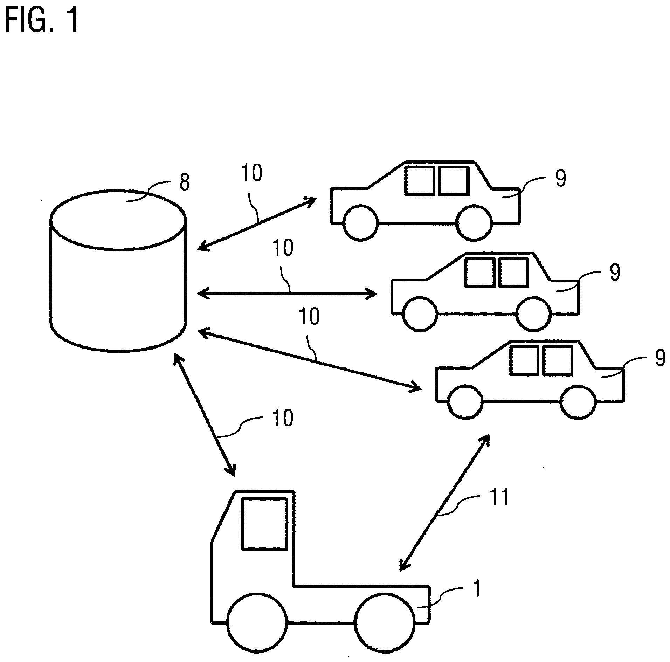

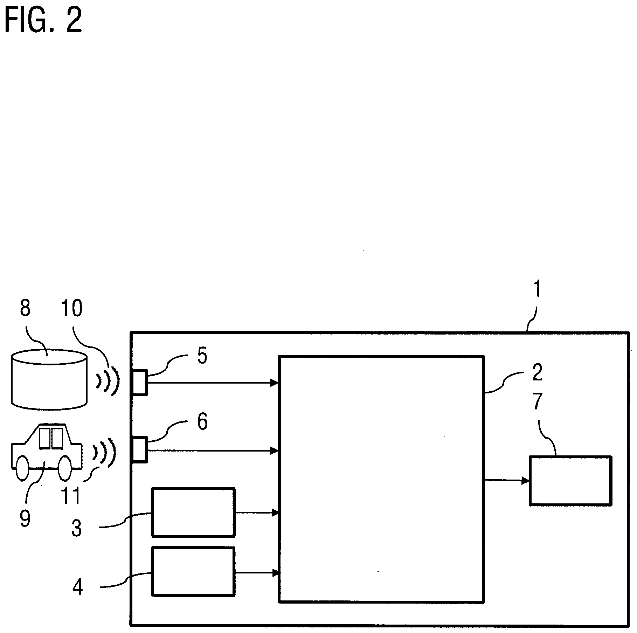

In Figur 1 ist eine Fahrzeug-zu-Fahrzeug-Kommunikation und eine Fernabfrage einer Datenbank gemäß einer Ausführungsform der Erfindung dargestellt. Das Nutzfahrzeug umfasst eine Vorrichtung zur Regelung oder Steuerung der Dämpferkraft der semiaktiven Dämpfer, die nachfolgend im Zusammenhang mit Figur 2 noch näher erläutert wird.

Die Vorrichtung zur Regelung oder Steuerung der Dämpferkraft kommuniziert im Fahrbetrieb des Nutzfahrzeugs 1 fortlaufend über eine Fahrzeug-zu-Fahrzeug-Kommunikation mit anderen Fahrzeugen 9, die sich innerhalb der Reichweite der Fahrzeug-zu-Fahrzeug-Kommunikation befinden und die ebenfalls mit einer erfindungsgemäß eingerichteten Vorrichtung zur Regelung oder Steuerung der Dämpferkraft ausgestattet sind. Die drahtlose Fahrzeug-zu-Fahrzeug-Kommunikation ist dargestellt durch den mit dem Bezugszeichen 11 gekennzeichneten Pfeil. Hierbei erfolgt die Fahrzeug-zu-Fahrzeug-Kommunikation bidirektional, d. h., ein an der Fahrzeug-zu-Fahrzeug-Kommunikation beteiligtes Fahrzeug empfängt von einem Fremdfahrzeug 9 ermittelte Parameterwerte, aus denen eine Fahrwerksanforderung und/oder eine Fahrbahnbeschaffenheit ableitbar ist, und sendet zugleich über die Fahrzeug-zu-Fahrzeug-Kommunikations-Schnittstelle entsprechende fahrzeug-intern ermittelte Parameterwerte an andere Fremdfahrzeuge 9.

Die Vorrichtung 2 des Nutzfahrzeugs 1 kommuniziert im Fahrbetrieb ferner mit einer oder mehreren externen Datenbanken 8, um auf dort abgelegte Parameterwerte zuzugreifen, aus denen eine Fahrwerksanforderung und/oder eine Fahrbahnbeschaffenheit ableitbar ist, und übermittelt ferner zur Zwischenspeicherung eigens ermittelte Parameterwerte an eine oder mehrere externe Datenbanken 8, damit Fremdfahrzeuge 9 darauf Zugriff haben. In analoger Weise kommunizieren die Fremdfahrzeuge 9 mit der externen Datenbank 8. Die drahtlose bidirektionale Kommunikation mit einer oder mehreren externen Datenbanken 8 ist dargestellt durch die mit dem Bezugszeichen 10 gekennzeichneten Pfeile.

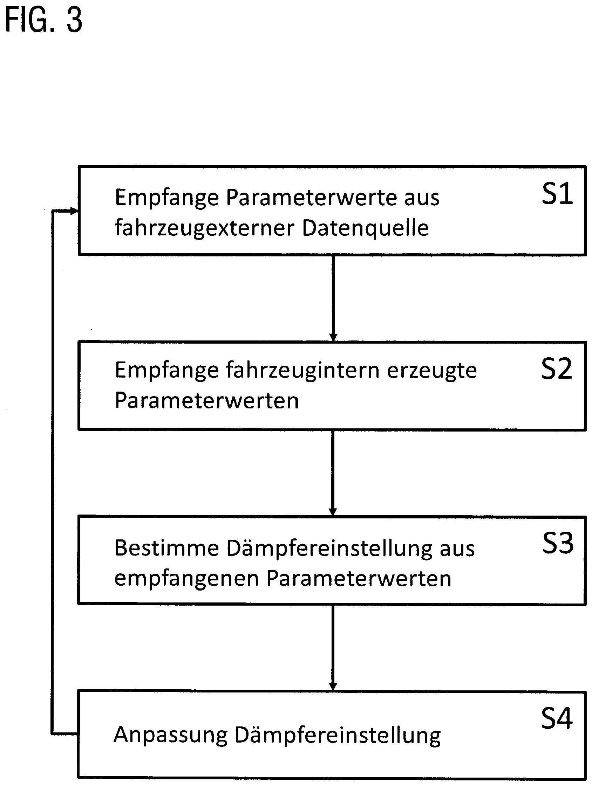

Figur 2 zeigt im groben Überblick das Blockschaltbild eines mit der Vorrichtung 2 zur Regelung oder Steuerung der Dämpferkraft verstellbarer Dämpfer versehenen Nutzfahrzeugs 1. Es wird ferner auf Figur 3 Bezug genommen, die die Arbeitsweise der Vorrichtung 2 sowie generell das erfindungsgemäße Verfahren beispielhaft anhand eines Ablaufdiagramms erläutert.

Das Fahrzeug 1 ist mit mehreren semiaktiven Dämpfern 7 ausgestattet, deren Dämpfungscharakteristik von der Vorrichtung 2 verstellbar ist. Hierbei sind den Rädern des Nutzfahrzeugs 1 sowie dem Fahrerhaus des Nutzfahrzeugs in an sich bekannter Weise semiaktive Dämpfer 7 zugeordnet. Die Stoßdämpfer 7 müssen je nach Fahrsituation und Straßenbeschaffenheit geregelt werden. Zur Bestimmung der Dämpfereinstellung ist die Vorrichtung 2 eingerichtet, verschiedene vorgegebene Parameter bzw. deren aktuelle Werte, aus denen eine Fahrwerksanforderung und/oder eine Fahrbahnbeschaffenheit ableitbar ist, aus verschiedenen externen Datenquellen 8, 9 (Schritt S1) und internen Datenquellen 3, 4 (Schritt S2) zu empfangen.

Hierzu kommuniziert die Vorrichtung 2 im Rahmen von Schritt S1, wie bereits im Zusammenhang mit Figur 1 beschrieben, fortlaufend über die Fahrzeug-zu-Fahrzeug-Schnittstelle 6 des Fahrzeugs 1 mit vorausfahrenden Fremdfahrzeugen 9, falls diese entsprechend eingerichtet sind, die für die Steuerung oder Regelung der Dämpfereinstellungen vorgegebenen Parameter zu bestimmen und anderen Fahrzeugen über eine Fahrzeug-zu-Fahrzeug-Kommunikation bereitzustellen. Ferner kommuniziert die Vorrichtung 2 über eine Drahtlosschnittstelle 5 des Fahrzeugs, wie bereits ebenfalls in Zusammenhang mit Figur 1 beschrieben, mit einer oder mehreren externen Datenbanken 8, um auf dort abgelegte Parameterwerte zuzugreifen, aus denen eine Fahrwerksanforderung und/oder eine Fahrbahnbeschaffenheit ableitbar ist.

Gleichzeitig kommuniziert die Vorrichtung 2 im Rahmen von Schritt S2 fortlaufend über einen CAN-Datenbus mit einer fahrzeuginternen Sensorik 4, die im Bereich der verstellbaren Dämpfer angeordnet ist und die der Vorrichtung 2 aktuelle Werte eines oder mehrerer Parameter bereitstellt, aus denen ebenfalls eine Fahrwerksanforderung und/oder eine Fahrbahnbeschaffenheit ableitbar ist. Ferner ist die Steuerung 2 eingerichtet, wenigstens einen Parameter, der von einem Fahrerassistenzsystem 3 des Fahrzeugs 1 erzeugt wird, zu verwenden.

Die Vorrichtung 2 ist zur Durchführung des Steuerungs- oder Regelungsverfahrens der Dämpfereinstellungen im Rahmen einer übergeordneten Betriebsstrategie eingerichtet, anhand der aus den verschiedenen Datenquellen 3, 4, 8 und 9 empfangenen Parameterwerte die Fahrsituation, den Fahrerwunsch, den Fahrbahn- und/oder Fahrzeugzustand zu erfassen und entsprechend vorgegebener Bewertungskriterien dann z. B. eine komfort- oder sicherheitsorientierte Dämpferregelung einzustellen (Schritt S3). Auf einer untergeordneten Ebene werden dann die Fahrzeug- und Fahrerhausbewegungen und das Schwingungsverhalten der einzelnen Räder geregelt, wobei die globale Regelvorgabe abhängig von der jeweiligen Situation von der Betriebsstrategie vorgegeben wird (Schritt S4).

Nachfolgend werden weitere Aspekte der Schritte S1 bis S4 anhand illustrierender Beispiele erläutert.

Die im Bereich der verstellbaren Dämpfer 7 angeordnete fahrzeuginterne Sensorik 4, mittels der die Bewegung eines oder mehrerer unmittelbar durch die Dämpfer 7 beeinflussten Elemente wie Rad- und Aufbaubewegungen erfasst wird, kann gemäß einer der Varianten, wie eingangs im Zusammenhang mit dem Stand der Technik beschrieben wurde, ausgeführt sein, um beispielsweise die Aufbaubeschleunigung, die Fahrwerks- oder Radbeschleunigungen und/oder die Dämpfergeschwindigkeit zu ermitteln. Beispielsweise können Abstandssensoren vorgesehen sein, die die Entfernung zwischen einem Rad und einem Fahrzeugaufbau im Zeitverlauf messen.

In Abhängigkeit von den fortlaufend ermittelten Parameterwerten der fahrzeuginternen Sensorik 4 kann die Dämpfungscharakteristik in an sich bekannter Weise angepasst werden. Aus einer erhöhten Aufbaubeschleunigung kann beispielsweise auf eine erhöhte Unebenheit oder Bodenwelligkeit der Fahrbahn geschlossen werden, da die Aufbaubeschleunigung abhängig von der Makrostruktur des Untergrundes ist und das Fahrzeug nach dem ersten Eintauchen je nach Härte der eingestellten Dämpfung und je nach Stärke der Unebenheit verschieden stark rückfedert, d. h., dass der Aufbau in vertikaler Richtung und vom Untergrund weg beschleunigt wird. Wenn somit die gemessene Aufbaubeschleunigung einen vorgegebenen Schwellenwert überschreitet, kann daraus eine unebene Fahrbahnbeschaffenheit und demzufolge eine "weichere" Einstellung der Dämpfer als Fahrwerksanforderung abgeleitet werden und die Dämpfercharakteristik dann entsprechend innerhalb vorgegebener Dämpferkennlinien geregelt werden.

Aus den Messwerten der fahrzeuginternen Sensorik 4 ist somit eine Fahrwerksanforderung und/oder eine Fahrbahnbeschaffenheit wie vorstehend beschrieben ableitbar, jedoch erst, wenn die geänderte Fahrwerksanforderung und/oder eine Fahrbahnbeschaffenheit bereits eingetreten ist, beispielsweise in Form einer erhöhten Unebenheit oder Bodenwelligkeit der Fahrbahn.

Erfindungsgemäß wird daher diese bekannte Steuerung oder Regelung der Dämpfereinstellungen von einer übergeordneten Betriebsstrategie ergänzt und überlagert. Hierzu werden zusätzlich eine oder mehrere Parameter verwendet, aus denen ebenfalls eine Fahrwerksanforderung und/oder eine Fahrbahnbeschaffenheit ableitbar ist, die jedoch von einer fahrzeugexternen Datenquelle 8, 9 bereitgestellt und deren aktuelle Werte vom Fahrzeug 1 im Fahrbetrieb empfangen werden.

Die hierzu in Schritt S1 empfangenen Daten können beispielsweise Wetterinformationen sein. Bei Regen, Schnee etc. wird aufgrund der Erkenntnisse eine stark sicherheitsbasierte Dämpfereinstellung mit dem Ziel geringster Radlastschwankungen angesteuert.

Ferner können die Daten Verkehrs- und/oder Kartenmaterialinformationen umfassen. Beispielsweise können in der Datenbank 8 Kartendaten hinterlegt sein, in denen Stellen und/oder Abschnitte mit schlechten Fahrbahnbelägen etc. markiert sind. Bei Vorhandensein derartiger Kartendaten werden diese von der Vorrichtung 2 für die aktuelle Fahrtroute abgefragt und ausgewertet, so dass die Vorrichtung 2 eine vorausliegende Fahrbahnverschlechterung erkennt, bevor diese vom Fahrzeug 1 erreicht wird. Die Vorrichtung 2 kann in diesem Fall die Charakteristiken der Dämpfer 7 rechtzeitig vor Erreichen der Fahrbahnverschlechterung anpassen, bevor die fahrzeuginterne Sensorik 4 diese Fahrbahnverschlechterung anhand einer Fahrzeug- oder Fahrerhausaufbaubewegung erkennen kann. Andererseits kann das Fahrzeug 1 Streckenabschnitte über dynamische Kartendaten "markieren", wenn diese mittels der fahrzeuginternen Sensorik 4 erkannt werden, und so schlechte Fahrbahnbeläge mittels der markierten Kartendaten an andere Fahrzeuge oder die externe Datenbank 8 weitergeben.

Ferner kann die Vorrichtung 2 fortlaufend die Geschwindigkeit vorausfahrender Fahrzeuge überwachen, die mittels einer Fahrzeug-zu-Fahrzeug-Kommunikation von den vorausfahrenden Fremdfahrzeugen empfangen wird oder direkt von einem Abstandstempomaten (Geschwindigkeitsregelanlage) des Fahrzeugs erhalten wird. Die oft kamerabasierten Informationen von Abstandstempomaten oder Informationen aus Sensoren wie Laser, Radar etc. ermöglichen eine größere Interpretationstiefe der aktuellen Fahrsituation und Fahrzeugumgebung als durch die herkömmliche Sensorik 4, die lediglich die Bewegung der unmittelbar durch die Dämpfer 7 beeinflussten Elemente wie Rad- und Aufbaubewegungen erfasst, wodurch eine bessere Prognosefähigkeit erreicht wird. Zum Beispiel kann aus einer plötzlicher Geschwindigkeitsverringerung der vorausfahrenden Fremdfahrzeuge auf eine mögliche Verschlechterung des Fahrbahnzustandes geschlossen werden, wenn aus weiteren internetbasierten Quellen bekannt ist, dass weder ein Tempolimit noch ein Stau vorliegen.

In Schritt S3 werden somit die Daten der unterschiedlichen Datenquellen 3, 4, 8, 9 ausgewertet und zusammengeführt. Durch Verwendung der unterschiedlichen Datenquellen 3, 4, 8, 9 können durch Querverbindungen zwischen einzelnen Informationen Zusatzinformationen generiert werden und sich ändernde Dämpferanforderungen daher genauer und frühzeitiger vorhergesagt werden. Wird z. B. anhand des Fahrgeschwindigkeitsverlaufs des vorausfahrenden Fahrzeugs eine Gefahrenbremsung des vorausfahrenden Fremdfahrzeugs erkannt, veranlasst die Vorrichtung 2 eine Fahrwerkseinstellung, die einen minimalen Bremsweg begünstigt, z. B mittels einer sog. Groundhook-Regelung.

Ein weiterer Vorzug der Verwendung der unterschiedlichen Datenquellen 3, 4, 8, 9 ist, dass anhand komplementärer und/oder redundanter Informationen die Ableitung einer Fahrwerksanforderung und/oder eine Fahrbahnbeschaffenheit aus den Parameterwerten weniger fehleranfällig durchgeführt werden kann. So können beispielsweise aus einer externen Internetdatenbank 8 abgefragte Daten betreffend die aktuelle Wetter- und Verkehrslage über die Kamerasysteme und/oder Laser-/Radarsensoren anderer Assistenzsysteme 3 abgeglichen und bestätigt werden. Die höhere Informationssicherheit verbessert dabei die Datenqualität.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Nutzfahrzeug
- 2: Vorrichtung zur Steuerung oder Regelung der Dämpferkraft verstellbarer Dämpfer
- 3: Fahrerassistenzsystem
- 4: Fahrzeugsensorik
- 5: Drahtlosschnittstelle
- 6: Schnittstelle zur Fahrzeugkommunikation
- 7: Verstellbarer semiaktiver Dämpfer
- 8: Datenbank
- 9: Fremdfahrzeug
- 10: Drahtlose Datenübertragung zwischen Datenbank und Fahrzeug
- 11: Fahrzeug zu Fahrzeug-Kommunikation

## Patentansprüche

1. Verfahren zur Regelung oder Steuerung der Dämpferkraft verstellbarer Dämpfer (7) in Kraftfahrzeugen (1), insbesondere in Nutzfahrzeugen mit semiaktiven Dämpfersystemen, wobei die Regelung oder Steuerung in Abhängigkeit von wenigstens einem Parameter erfolgt, aus dem eine Fahrwerksanforderung und/oder eine Fahrbahnbeschaffenheit ableitbar ist, wobei ein Parameterwert des wenigstens einen Parameters von einer fahrzeugexternen Datenquelle (8, 9) bereitgestellt und vom Kraftfahrzeug (1) im Fahrbetrieb empfangen wird;
**dadurch gekennzeichnet,**
**dass** die Regelung oder Steuerung in Abhängigkeit von wenigstens einem fahrzeugintern ermittelten Parameter wenigstens eines Fahrerassistenzsystems (3) erfolgt, aus dem eine Fahrwerksanforderung und/oder eine Fahrbahnbeschaffenheit ableitbar ist; und
**dass** das wenigstens eine Fahrerassistenzsystem einen Abstandstempomaten umfasst und der fahrzeugintern ermittelte Parameter einen Geschwindigkeitsverlauf eines vorausfahrenden Fremdfahrzeugs angibt.

2. Verfahren nach Anspruch 1, **dadurch gekennzeichnet,**
(a) **dass** die fahrzeugexterne Datenquelle wenigstens ein Fremdfahrzeug (9) ist und der Parameterwert des wenigstens einen Parameters drahtlos über eine Fahrzeug-zu-Fahrzeug-Kommunikation (10) empfangen wird; und/oder
(b) **dass** die fahrzeugexterne Datenquelle eine Datenbank (8), vorzugsweise eine Internetdatenbank, ist, in der der Parameterwert des wenigstens einen Parameters hinterlegt ist und per Drahtlosfernabfrage (11) vom Kraftfahrzeug (1) abrufbar ist.

3. Verfahren nach Anspruch 1 oder 2, **dadurch gekennzeichnet, dass** der wenigstens eine Parameter eine Wetterinformation, eine Verkehrsinformation, eine Fahrbahnbeschaffenheit und/oder eine Karteninformation betreffend die aktuelle Fahrposition des Fahrzeugs (1) angibt.

4. Verfahren nach einem der vorhergehenden Ansprüche, **dadurch gekennzeichnet, dass** der wenigstens eine Parameter einen Betriebszustand und/oder ein Fahrverhalten mindestens eines Fremdfahrzeugs (9) angibt, das aktuell auf der gleichen Straße oder zumindest in der Nähe von dem Kraftfahrzeug (1) fährt.

5. Verfahren nach Anspruch 4, **dadurch gekennzeichnet, dass** aus dem wenigstens einen Parameter ein aktueller Geschwindigkeitsverlauf oder eine Fahrwerksaktivität, insbesondere eine Rad- und/oder Karosserieaufbaubewegung, mindestens eines Fremdfahrzeugs (9) ableitbar ist.

6. Verfahren nach einem der vorhergehenden Ansprüche 3 bis 5, **dadurch gekennzeichnet, dass** die jeweiligen Parameterwerte zusammen mit einer Ortsinformation bereitgestellt werden, die die geographische Stelle angibt, für den der jeweilige Parameterwert gültig ist.

7. Verfahren nach einem der vorhergehenden Ansprüche, **dadurch gekennzeichnet, dass** das wenigstens eine Fahrerassistenzsystem ein Kamerasystem, Lasersystem und/oder Radarsystem des Fahrzeugs umfasst und der fahrzeugintern ermittelte Parameter eine mit einem solchen System ermittelte aktuelle Wetterinformation und/oder Fahrbahninformation angibt.

8. Verfahren nach einem der vorhergehenden Ansprüche, **dadurch gekennzeichnet, dass** die empfangenen Parameterwerte des wenigstens einen Parameters der fahrzeugexternen Datenquelle anhand der Parameterwerte des fahrzeugintern ermittelten Parameters plausibilisiert werden.

9. Verfahren nach einem der vorhergehenden Ansprüche, **dadurch gekennzeichnet, dass** eine sicherheitsbasierte Dämpfereinstellung für die Dämpferkraft des verstellbaren Dämpfers eingestellt wird, die möglichst geringe Radlastschwankungen bewirkt, wenn
(a) der wenigstens eine Parameter eine Wetterinformation angibt und diese eine hohe Wahrscheinlichkeit für Regen oder Schnee an der aktuellen Fahrposition des Kraftfahrzeugs (1) angibt; und/oder
(b) aus dem wenigstens einen Parameter ein aktueller Geschwindigkeitsverlauf oder eine Fahrwerksaktivität mindestens eines Fremdfahrzeugs (9) ableitbar ist, das aktuell auf der gleichen Straße oder zumindest in der Nähe von dem Kraftfahrzeug (1) fährt, und wenn aus dem Geschwindigkeitsverlauf eine erhöhte Bremsaktivität ableitbar ist und/oder eine erhöhte Fahrwerksaktivität des Fremdfahrzeugs (9) vorliegt.

10. Verfahren nach einem der vorhergehenden Ansprüche, **dadurch gekennzeichnet,**
(a) **dass** der verstellbare Dämpfer (7) ein semiaktiver Stoßdämpfer eines Fahrwerks ist; und/oder
(b) **dass** das Dämpfungssystem ein Fahrerhausdämpfungssystem und/oder ein Ladungslagerungssystem eines Nutzfahrzeugs ist.

11. Verfahren nach einem der vorhergehenden Ansprüche, **dadurch gekennzeichnet, dass** das Fahrzeug (1) eine einem Fahrbahnabschnitt zuordenbare zeitlich veränderliche Information, insbesondere eine Fahrbahnbeschaffenheit, eine Wetterinformation, oder eine Verkehrsinformation mittels eines fahrzeuginternen Sensorsystems und/oder einer Verkehrszeichenerkennung erfasst, Kartendaten erzeugt, auf denen die erfasste zeitlich veränderliche Information den entsprechenden Fahrbahnabschnitten zugeordnet sind, und die erzeugten Kartendaten an ein Fremdfahrzeug (9) über eine Fahrzeug-zu-Fahrzeug-Kommunikation (10) und/oder an eine Datenbank (8), vorzugsweise eine Internetdatenbank, übermittelt.

12. Vorrichtung (2) zur Regelung oder Steuerung der Dämpferkraft verstellbarer Dämpfer (7) in Kraftfahrzeugen (1), insbesondere in Nutzfahrzeugen, mit semiaktiven Dämpfersystemen, wobei die Vorrichtung (2) eingerichtet ist, die Regelung oder Steuerung in Abhängigkeit von wenigstens einem Parameter durchzuführen, aus dem eine Fahrwerksanforderung und/oder eine Fahrbahnbeschaffenheit ableitbar ist, wobei die Vorrichtung (2) eingerichtet ist, im Fahrbetrieb einen Parameterwert des wenigstens einen Parameters von einer fahrzeugexternen Datenquelle (8, 9) zu empfangen,
**dadurch gekennzeichnet,**
**dass** die Vorrichtung (2) ferner eingerichtet ist, dass die Regelung oder Steuerung in Abhängigkeit von wenigstens einem fahrzeugintern ermittelten Parameter wenigstens eines Fahrerassistenzsystems (3) durchzuführen, aus dem eine Fahrwerksanforderung und/oder eine Fahrbahnbeschaffenheit ableitbar ist; und
**dass** das wenigstens eine Fahrerassistenzsystem einen Abstandstempomaten umfasst und der fahrzeugintern ermittelte Parameter einen Geschwindigkeitsverlauf eines vorausfahrenden Fremdfahrzeugs angibt.

13. Vorrichtung (2) nach Anspruch 12, **dadurch gekennzeichnet, dass** die Vorrichtung eingerichtet ist, das Verfahren nach einem der Ansprüche 2 bis 11 durchzuführen.

14. Kraftfahrzeug (1), insbesondere Nutzfahrzeug, mit einer Vorrichtung (2) nach Anspruch 12 oder 13.

## Claims

1. Method for controlling the damping force of adjustable dampers (7) in motor vehicles (1), particularly in commercial vehicles having semi-active damper systems, the control being effected in dependence on at least one parameter from which a chassis requirement and/or a road condition can be derived, a parameter value of the at least one parameter being provided by an off-board data source (8, 9) and received by the motor vehicle (1) in driving mode;
**characterized in that**
the control takes place in dependence on at least one parameter determined on board of at least one driver assistance system (3) from which a chassis requirement and/or a road condition can be derived; and
the at least one driver assistance system comprises a proximity control and the parameter determined on board specifies a speed variation of a preceding other vehicle.

2. Method according to Claim 1, **characterized in that**
(a) the off-board data source is at least one other vehicle (9) and the parameter value of the at least one parameter is received wirelessly via a vehicle-to-vehicle communication (10); and/or
(b) the off-board data source is a database (8), preferably an Internet database, in which the parameter value of the at least one parameter is deposited and can be called up from the motor vehicle (1) by wireless remote query (11).

3. Method according to Claim 1 or 2, **characterized in that** the at least one parameter specifies an item of weather information, an item of traffic information, a road condition and/or an item of map information relating to the current driving position of the vehicle (1).

4. Method according to one of the preceding claims, **characterized in that** the at least one parameter specifies an operating condition and/or a driving characteristic of at least one other vehicle (9) which is currently driving on the same road or at least in the vicinity of the motor vehicle (1).

5. Method according to Claim 4, **characterized in that** from the at least one parameter, a current speed variation or a chassis activity, particularly a wheel and/or body movement, of at least one other vehicle (9) can be derived.

6. Method according to one of the preceding Claims 3 to 5, **characterized in that** the respective parameter values are provided together with an item of location information which specifies the geographic position to which the respective parameter value applies.

7. Method according to one of the preceding claims, **characterized in that** the at least one driver assistance system comprises a camera system, laser system and/or radar system of the vehicle and the parameter determined on board specifies a current item of weather information and/or road information determined by means of such a system.

8. Method according to one of the preceding claims, **characterized in that** the received parameter values of the at least one parameter of the off-board data source are validated by means of the parameter values of the parameter determined on board.

9. Method according to one of the preceding claims, **characterized in that** a safety-based damper setting for the damping force of the adjustable damper is set which produces the lowest possible wheel load fluctuations when
(a) the at least one parameter specifies an item of weather information and this specifies a high probability of rain or snow at the current driving position of the motor vehicle (1); and/or
(b) from the at least one parameter a current speed variation or a chassis activity of at least one other vehicle (9) can be derived, which vehicle is currently driving on the same road or at least in the vicinity of the motor vehicle (1), and if an increased braking activity can be derived from the speed variation and/or an increased chassis activity of the other vehicle (9) is present.

10. Method according to one of the preceding claims, **characterized in that**
(a) the adjustable damper (7) is a semi-active shock absorber of a chassis; and/or
(b) the damping system is a driver cabin damping system and/or a load storage system of a commercial vehicle.

11. Method according to one of the preceding claims, **characterized in that** the vehicle (1) detects a time-variable information item which can be allocated to a road section, particularly a road condition, an item of weather information or an item of traffic information by means of an on-board sensor system and/or traffic signal recognition, generates map data on which the time-variable information detected is allocated to the corresponding road sections and transmits the generated map data to another vehicle (9) via a vehicle-to-vehicle communication (10) and/or to a database (8), preferably an Internet database.

12. Device (2) for controlling the damping force of adjustable dampers (7) in motor vehicles (1), particularly in commercial vehicles, comprising semi-active damper systems, the device (2) being configured to perform the control in dependence on at least one parameter from which a chassis requirement and/or a road condition can be derived, the device (2) being configured to receive a parameter value of the at least one parameter from an off-board data source (8, 9) in driving mode,
**characterized in that**
the device (2) is furthermore configured to carry out the control in dependence on at least one parameter determined on board of at least one driver assistance system (3) from which a chassis requirement and/or a road condition can be derived; and
the at least one driver assistance system comprises a proximity control and the parameter determined on board specifies a speed variation of a preceding other vehicle.

13. Device (2) according to Claim 12, **characterized in that** the device is configured to perform the method in accordance with one of Claims 2 to 11.

14. Motor vehicle (1), particularly commercial vehicle, comprising a device (2) according to Claim 12 or 13.

## Revendications

1. Procédé destiné à la régulation ou à la commande de la force d'amortissement d'amortisseurs (7) pouvant être ajustés, dans des véhicules à moteur (1), en particulier dans des véhicules utilitaires, équipés de systèmes d'amortisseur semi-actifs ;
dans lequel la régulation ou la commande est réalisée en fonction de tout au moins un paramètre, à partir duquel il est possible d'en déduire une exigence du châssis et/ou un état de la chaussée ;
dans lequel une valeur de paramètre du tout au moins un paramètre est mise à disposition par une source de données (8, 9) externe au véhicule et est reçue par le véhicule à moteur (1) quand ce dernier se trouve en mode de conduite ;
**caractérisé en ce que**
la régulation ou la commande est réalisée en fonction de tout au moins un paramètre de tout au moins un système d'assistance au conducteur (3), lequel paramètre est déterminé de manière interne au véhicule et à partir duquel paramètre il est possible d'en déduire une exigence du châssis et/ou un état de la chaussée ; et **caractérisé en ce que**
le tout au moins un système d'assistance au conducteur comprend un radar de régulation de la distance et le paramètre déterminé de manière interne au véhicule indique une courbe de vitesse d'un véhicule étranger qui précède le véhicule à moteur.

2. Procédé selon la revendication 1, **caractérisé en ce que**
(a) la source de données externe au véhicule est tout au moins un véhicule étranger (9) et la valeur de paramètre du tout au moins un paramètre est reçue par l'intermédiaire d'une communication sans fil de véhicule à véhicule (10) ; et/ou
(b) la source de données externe au véhicule est une banque de données (8), de préférence une banque de données sur Internet, dans laquelle la valeur de paramètre du tout au moins un paramètre est archivée et peut être appelée par le véhicule à moteur (1) au moyen d'une interrogation à distance sans fil (11).

3. Procédé selon la revendication 1 ou 2, **caractérisé en ce que** le tout au moins un paramètre indique une information relative à la météo, une information relative à la circulation routière, un état de la chaussée et/ou une information cartographique concernant la localisation actuelle du véhicule (1).

4. Procédé selon l'une des revendications précédentes, **caractérisé en ce que** le tout au moins un paramètre indique un état de fonctionnement et/ou un comportement de conduite d'au moins un véhicule étranger (9) qui circule actuellement sur la même chaussée que le véhicule à moteur (1) ou tout au moins à proximité du véhicule à moteur (1).

5. Procédé selon la revendication 4, **caractérisé en ce qu'**une courbe de vitesse actuelle ou une activité actuelle du châssis d'au moins un véhicule étranger (9) peut être déduite à partir du tout au moins un paramètre, en particulier un mouvement de la carrosserie et/ou un mouvement des roues.

6. Procédé selon l'une des revendications précédentes 3 à 5, **caractérisé en ce que** les valeurs de paramètre respectives sont mises à disposition en commun avec une information de localisation qui indique l'emplacement géographique, pour lequel la valeur de paramètre respective est valable.

7. Procédé selon l'une des revendications précédentes, **caractérisé en ce que** le tout au moins un système d'assistance au conducteur comprend un système de caméra, un système laser et/ou un système radar du véhicule et le paramètre déterminé de manière interne au véhicule indique une information actuelle relative à la météo et/ou une information actuelle relative à l'état de la chaussée, laquelle information est déterminée au moyen d'un tel système.

8. Procédé selon l'une des revendications précédentes, **caractérisé en ce que** les valeurs de paramètre reçues du tout au moins un paramètre de la source de données externe au véhicule sont examinées quant à leur plausibilité à l'aide des valeurs de paramètre du paramètre déterminé de manière interne au véhicule.

9. Procédé selon l'une des revendications précédentes, **caractérisé en ce qu'**un réglage des amortisseurs basé sur la sécurité est effectué pour la force d'amortissement de l'amortisseur pouvant être ajusté, lequel réglage provoque le moins de fluctuations possible sur la charge des roues, quand :
(a) le tout au moins un paramètre indique une information relative à la météo et celle-ci fait état d'une forte probabilité de pluie ou de chute de neige au niveau de l'emplacement actuel du véhicule à moteur (1) ; et/ou
(b) une courbe de vitesse actuelle ou une activité actuelle du châssis d'au moins un véhicule étranger (9), lequel circule actuellement sur la même chaussée que le véhicule à moteur (1) ou tout au moins à proximité du véhicule à moteur (1), peut être déduite à partir du tout au moins un paramètre, et quand une activité de freinage accrue peut être déduite à partir de la courbe de vitesse et/ou en présence d'une activité accrue du châssis du véhicule étranger (9).

10. Procédé selon l'une des revendications précédentes, **caractérisé en ce que**
(a) l'amortisseur (7) pouvant être ajusté est un amortisseur de chocs semi-actif d'un châssis ; et/ou
(b) le système d'amortissement est un système d'amortissement de la cabine du conducteur et/ou un système de stockage du chargement d'un véhicule utilitaire.

11. Procédé selon l'une des revendications précédentes, **caractérisé en ce que** le véhicule (1) saisit des informations variables dans le temps, lesquelles peuvent être associées à un tronçon de la chaussée, en particulier un état de la chaussée, une information relative à la météo ou une information relative à la circulation routière, au moyen d'un système de capteurs interne au véhicule et/ou au moyen d'un système de reconnaissance des panneaux de signalisation ; et **caractérisé en ce que** le véhicule (1) génère des données cartographiques, sur lesquelles les informations variables dans le temps qui ont été saisies sont associées aux tronçons de la chaussée correspondants ; et
**caractérisé en ce que** le véhicule (1) transmet les données cartographiques générées à un véhicule étranger (9) par l'intermédiaire d'une communication de véhicule à véhicule (10) et/ou à une banque de données (8), de préférence à une banque de données sur Internet.

12. Dispositif (2) destiné à la régulation ou à la commande de la force d'amortissement d'amortisseurs (7) pouvant être ajustés, dans des véhicules à moteur (1), en particulier dans des véhicules utilitaires, équipés de systèmes d'amortisseur semi-actifs ;
dans lequel le dispositif (2) est configuré en vue de réaliser la régulation ou la commande proprement dite en fonction de tout au moins un paramètre, à partir duquel il est possible d'en déduire une exigence du châssis et/ou un état de la chaussée ;
dans lequel le dispositif (2) est configuré en vue de recevoir, en mode de conduite, une valeur de paramètre du tout au moins un paramètre depuis une source de données (8, 9) externe au véhicule ;
**caractérisé en ce que**
le dispositif (2) est en outre configuré de telle sorte que la régulation ou la commande est réalisée en fonction de tout au moins un paramètre de tout au moins un système d'assistance au conducteur (3), lequel paramètre est déterminé de manière interne au véhicule et à partir duquel paramètre il est possible d'en déduire une exigence du châssis et/ou un état de la chaussée ; et **caractérisé en ce que**
le tout au moins un système d'assistance au conducteur comprend un radar de régulation de la distance et le paramètre déterminé de manière interne au véhicule indique une courbe de vitesse d'un véhicule étranger qui précède le véhicule à moteur.

13. Dispositif (2) selon la revendication 12, **caractérisé en ce que** le dispositif est configuré en vue de réaliser le procédé selon l'une des revendications précédentes 2 à 11.

14. Véhicule à moteur (1), en particulier véhicule utilitaire, avec un dispositif (2) selon la revendication 12 ou 13.
